# EUROPEAN PATENT APPLICATION

(11) **EP 1 724 689 A1**
(43) Date of publication of application: **22.11.2006**
(21) Application number: 05710518.1
(22) Date of filing: 22.02.2005
(51) Int. Cl.: G06F 13/00, G06F 15/00, H04M 3/42, H04M 3/487

(54) **PORTAL SITE PROVIDING SYSTEM, AND SERVER, METHOD, AND PROGRAM USED FOR THE SAME**

(30) Priority: 23.02.2004 JP 2004046334
(71) Applicant: NEC CORPORATION, Minato-ku, Tokyo 108-8001 (JP)
(72) Inventor: SONETAKA, Noriyoshi, Minato-ku, Tokyo 1088001 (JP)
(74) Representative: Glawe, Delfs, Moll
(86) International application number: PCT/JP2005/002792
(87) International publication number: WO 2005/081117

(57) **Abstract**

[PROBLEMS] An object is to improve the convenience at the time of using the Internet by a portable terminal owned by a user.

[MEANS FOR SOLVING PROBLEMS] The present invention comprises a portal specifying information receiving device for receiving portal specifying information which specifies the contents of a portal site from a user through an input device; and an address data storage device for reading out the address data accessible to the portal site which is specified according to the portal specifying information from an address data storage apparatus in which the address data is stored in advance through a data reading/writing device for storing it to a memory medium of the portable terminal.

## Description

### TECHNICAL FIELD

The present invention relates to a portal site providing system and, specifically, to a system which distributes data for displaying a portal site requested by a user. Further, it relates to each device constituting the system, a data providing method, and a program.

### BACKGROUND ART

In recent years, a portable terminal such as a portable telephone, PHS (Personal Handyphone System), PDA (Personal Digital Assistant) or the like comprises a function of enabling an access to websites on the network as a standard function, thereby enabling to obtain specific contents. Specifically, a communication function is provided for making an access to websites on the network through a specific protocol. Further, an address data (URL) of a portal site as a portal of the Internet, which is accessed in the beginning, is stored in advance and the portal site under this address is being accessed.

Such portal website provides address data (links) of other websites which are classified into various categories. Users can access to websites so as to obtain desired information of various kinds by selecting these links.

Patent Literature 1: Japanese Patent Unexamined Publication No.2003-141154
Patent Literature 2: Japanese Patent Unexamined Publication No. 2003-345827

### DISCLOSURE OF THE INVENTION

### PROBLEMS TO BE SOLVED BY THE INVENTION

However, in a conventional portable terminal, the address data (URL) of a portal site to be accessed in the beginning is already pre-stored at the time of purchase. Thus, there is less opportunity to use portal sites other than the stored site is decreased. Especially, in the portable terminal such as a portable telephone which has a limited operation method and the like, it is difficult to input a new URL at the time of accessing to the websites. Thus, it is not likely to make an access to a new site additionally, and the portal site stored in advance is continued to be used. The portal site stored in advance in the portable terminal, for example, is a portal site built by the maker (carrier) providing the communication service of the portable telephone, or by the maker manufacturing the portable terminal.

In such a condition, it is all right if the above-described portal site which is set to be accessed in advance is a user-friendly site for all the users , however, it is not necessarily so. For example, such site is formed to suit everyone, thereby including links to sites of many categories. Therefore, it is extremely difficult for a user to select one's target site. Further, even if one category is selected, only the links of the sites displayed in the higher positions can be shown since the space of the display screen in the portable terminal is limited. Thus, it is still difficult to search the target site.

In the meantime, a method for searching a target site by using a search site may be considered. However, the number of keys in the operation unit of the portable terminal is limited and also each key is small, so that it is difficult to perform input and the searching operation is not easy. Even if searching is performed and a large number of sites are hit as a result, it is difficult to read all the results on the small display screen. Thereby, the same drawbacks as described above remain.

Techniques for improving such inconveniences are disclosed in Patent Literature 1 and Patent Literature 2. Both disclose a device capable of customizing a portal site for individual-use. In the devices, a portal site displaying only the links of the sites which are often accessed by the user oneself is built. Thereby, it enables for the user to always make an access to the site or to easily make an access to the target site by displaying the site screen.

However, even if the techniques disclosed in Patent Literature 1 and Patent Literature 2 are used, it is still necessary to access to the target site or to perform operation such as inputting the URL of the site or the like in the portable terminal as a preparation for building the individual-use portal site. Thus, the operation is still difficult as in the above-described case. Especially, it is difficult for a user who has just purchased a portable telephone to perform operation for customizing the portal site. Therefore, the user would access to the portal site of the communication carrier or to the portal site of the terminal maker provided in advance, and the above-described drawbacks cannot be overcome.

An object of the present invention is to improve the inconveniences of the above-described conventional cases and, specifically, to provide a system which can display a portal site desired by a user oneself at the time of connecting to the Internet without requiring the user to operate the portable terminal and enables to improve the convenience for the user when using the Internet through the portable terminal.

### MEANS FOR SOLVING THE PROBLEMS

The portal site data providing device of the present invention is a portal site data providing device, comprising an input device for receiving information inputted by a user and a data reading/writing device for reading/writing data from/to a memory medium by mounting the memory medium which is removable from the portable terminal, for providing, to the memory medium of the portable terminal, information regarding a portal site which is displayed when connecting to a network using the portable terminal, the portal site data providing device further comprising:
a portal specifying information receiving device for receiving portal specifying information which specifies contents of a portal site from a user through the input device; and an address data storage device for reading out the address data accessible to the portal site which is specified according to the portal specifying information from an address data storage apparatus in which the address data is stored in advance through a data reading/writing device for storing it to the memory medium of the portable terminal.

Also, it is a portal site data providing device, comprising an input device for receiving information inputted by a user and a data reading/writing device for reading/writing data from/to a memory medium being built in to be mounted to the portable terminal, for providing, to the memory medium of the portable terminal, information regarding a portal site which is displayed when connecting to a network using a portable terminal, the portal site data providing device further comprising:
a portal specifying information receiving device for receiving portal specifying information for specifying contents of a portal site from a user through the input device; and an address data storage device for reading out the address data accessible to the portal site which is specified according to the portal specifying information from an address data storage apparatus in which the address data is stored in advance through a data reading/writing device for storing it to the memory medium of the portable terminal.

It is desirable to comprise, in addition to the above-described configuration, a display device for displaying prescribed information to a user; and a display control device for displaying portal contents information on the display device by reading it out from a portal contents information storage apparatus in which the portal contents information showing the contents of various portal sites is stored, wherein the portal specifying information receiving device receives portal specifying information from a user for showing contents of a portal site which is selected and specified by a user according to the portal contents information displayed on the display device.

With the configuration as described above, first, the user who owns the portable terminal sets the portable terminal or the memory medium mounted to the portable terminal into the data reading/writing device of the portal site data providing device. Upon this, the contents information of the portal site read out from the portal contents information storage device is displayed on the display unit. The user reads the displayed contents and inputs the information for specifying the contents of the portal site through the operation unit. Upon this, the address data for accessing to the specified portal site is read out from a prescribed storage device, which is then transmitted and stored in the memory medium of the portable terminal or the removable memory medium. Therefore, when making an access to the website on the network through the portable terminal thereafter, it is possible to access to the portal site displaying the contents which are selected and specified by the user according to the access data providing by the above-described device. Thereby, it enables to make an access to the user-friendly portal site for the user without operating the portable terminal in advance for setting the portal site having the links to the one's desired site.

Further, in addition to the above-described configuration, the portal contents information stored in the portal contents information storage apparatus may be information regarding various websites which can be accessed in advance through the portal site.

Thereby, the user can recognize the details of the contents of the portal site which can be selected so that an appropriate portal site can be selected. Thus, the convenience can be more improved.

Further, in addition to the above-described configuration, the portal specifying information receiving device has a function of receiving website specifying information for selecting and specifying a website displayed on the display device; and
the portal site data providing device comprises;
a portal screen data building device for building a portal screen data which shows display data related to an address data accessible to the website selected and specified according to the website specifying information, and
instead of the address data storage device, a portal screen data storage device for storing the portal screen data built by the portal screen data building device in the memory medium of the portable terminal through the data reading/writing device.

Thereby, the portal screen data in which the links to the address data of the various websites selected by the user are collected is built, and it is stored in the portable terminal. Accordingly, the portal screen displaying the links to the websites, which is the menu selected by the user oneself, is displayed on the portable terminal. Thus, the user-friendly portal screen is displayed at the time of connecting to the network without operating the portable terminal in advance for setting the portal site having the links to the one's desired site, and it is possible to access to each site displayed therein.

Further, in addition to the above-described configuration, it is desirable that the portal specifying information receiving device have a function of receiving website specifying information for selecting and specifying a website displayed on the display device;
the portal site data providing device comprise a portal information transmitting device for transmitting the website specifying information as the portal information to a portal managing server which manages portal information of the user present on a network; and
the address data stored in the memory medium of the portable terminal by the address data storage device be an address data accessible to a portal site built by the portal managing server according to the portal information transmitted to the portal managing server.

At this time, it may be in the configuration that the portal information transmitting device transmits an identification data peculiar to a user, which is inputted through the input device, to the portal managing server by including it in the website specifying information. Further, it may be in configuration that the portal site data providing device further comprises an identification data reading-out device for reading out identification data peculiar to a user being stored in advance in a memory medium from the memory medium of the portable terminal through the data reading/writing device, and the portal information transmitting device transmits the identification data read out by the identification data reading-out device to the portal managing server by including it to the website specifying information.

Thereby, first, the website specific information for specifying the various websites selected by the user is stored in the portal managing server. After that, when the user makes an access to the portal managing server according to the address data stored in the portable terminal, the portal screen data containing the links to the websites is built by the portal managing server based on the portal information containing the website specifying information, and the portal site is displayed on the portable terminal. Thereby, the portal screen comprising the menu selected by the user can be displayed on the portable terminal and it becomes possible to make an access to each portal site easily. Especially, since the data for identifying the user is contained in the website specifying information, the portal site peculiar to the user is built in the portal managing server. Further, the portal site data can be transmitted only in response to an access from the user and the convenience can be more improved.

Further, in the present invention, it is desirable that, in addition to the above-described configuration, the portable terminal is a GSM-type portable telephone, and the memory medium of the portable terminal is an SIM card.

Thus, the SIM card to which the identification data of the user is stored is used by being mounted to the portable telephone as the portable terminal and the address data for the portal site is stored therein. Thereby, it is always stored in the portable terminal and an access to the one's desired portal site is surely achieved. Further, the SIM card is always mounted even at the time of using another portable telephone, so that it is possible to make an access to one's desired portal site in such a case. Therefore, the convenience can be more improved.

Further, the present invention is a method for providing portal site data using a portal site data providing device for functioning to store information regarding a portal site which is displayed when connecting to a network through a portable terminal onto the memory medium of the portable terminal, the method comprising: a portal specific information receiving step in which the portal site data providing device receives portal specifying information which specifies contents of a portal site from a user through an input device; an address data reading-out step in which the portal site data providing device reads out, from an address data storage device to which the address data is stored in advance, an address data accessible to the portal site which is specified according to the portal specifying information; and an address data storing step for storing the address data in a memory medium of the portable terminal by a data reading/writing device provided to the portal site data providing device, and a memory medium mounting step for taking out the memory medium from the portable terminal and mounting it to the data reading/writing device at least before the address data storing step.

Also, the present invention is a method for supplying portal site data using a portal site data providing device for functioning to store information regarding a portal site which is displayed when connecting to a network through a portable terminal onto the memory medium of the portable terminal, the method comprising: a portal specific information receiving step in which the portal site data providing device receives portal specifying information which specifies contents of the portal site from a user through an input device; an address data reading-out step in which the portal site data providing device reads out, from an address data storage device to which the address data is stored in advance, an address data accessible to the portal site which is specified according to the portal specifying information; and an address data storing step for storing the address data in a memory medium which is built in the portable telephone by a data reading/writing device provided to the portal site data providing device, and
at least before the address data storing step, a portable terminal mounting step for mounting the portable terminal to the data reading/writing device so that the data reading/writing device becomes accessible to the memory medium built in the portable telephone.

Further, the present invention provides a portal site data providing program, used for a portal site data providing device which provides, to a memory medium of the portable terminal, information on a portal site which is displayed when connecting to a network using a portable terminal, the program achieving:
a portal specifying information receiving device for receiving portal specifying information for specifying contents of a portal site from a user through the input device; and
an address data storage device for reading out the address data accessible to the portal site which is specified according to the portal specifying information from an address data storage device in which the address data is stored in advance through a data reading/writing device for storing it to the memory medium of the portable terminal.

Further, the present invention provides a portal managing server for providing a portal site to a portable terminal which is making an access, by being connected through a network to a portal site data providing device which writes an address data accessible to a portal site onto a memory medium of a portable terminal to be an access target of the address data, the portal managing server comprising:
a portal site building data storage device for storing information for building the portal site to be supplied to the portable terminal; a portal information storage device for storing portal information which selects and specifies the portal site inputted by a user to the portal site data providing device by receiving it from the portal site data providing device; and a portal site information distribution device for reading out, from the portal site building data storage device, information for displaying the portal site which is specified by the portal information according to an access from the portable terminal for transmitting it to the portable terminal.

Also, the present invention provides a portal managing server providing a portal site to a portable terminal making an access, by being connected through a network to a portal site data providing device which writes an address data accessible to a portal site onto a memory medium of a portable terminal to be an access target of the address data, the portal managing server comprising:
a portal site building data storage device for storing information for building the portal site to be supplied to the portable terminal; a portal information storage device for storing portal information which selects and specifies a website inputted by a user to the portal site data providing device by receiving it from the portal site data providing device; a portal site building device for building, based on the information stored in the portal site building data storage device, a portal site which shows a display data accessible to the website specified by the portal information in response to an access from the portable terminal; and a portal site information distribution device for transmitting the information for displaying the built portal site to the portable terminal.

Further, it is desirable that, in the above-described configuration, the portal information storage device has a function of receiving and storing an identification data peculiar to a user being inputted to the portal site data providing device along with the portal information by relating them; and
the portal site building device has functions of: requesting and obtaining the peculiar identification data of the portable terminal when receiving an access from the portable terminal; judging whether or not the obtained identification data and the identification data stored by the portal information storage device are consistent; and building a portal site based on the portal information stored by being related to the stored identification data when the data are consistent.

In the portable managing server with the above-described configuration, when there is an access from the user, the portal site for each user is built according to the portal information indicting the contents of the portal site which is selected and set by the user, and the portal site is distributed. Thus, only the URL of the portal site needs to be stored in the portable terminal of the user. Therefore, as described above, the convenience for the user can be improved while saving the memory of the portable terminal which has a small storage capacity.

Further, the present invention provides a method for distributing a portal site using a portal managing server which supplies a portal site to a portable terminal which is making an access, the method comprising:
a portal information storing step in which the portal managing server stores portal information which selects and specifies a portal site inputted by a user to a portal site data providing device connected through a network by receiving it from the portal site data providing device; a portal site building step for building, based on the information stored in advance in the portal site building data storage device, a portal site which shows a display data accessible to the website specified by the portal information in response to an access from the portable terminal; and a portal site information distribution step for transmitting the information for displaying the built portal site to the portable terminal.

Also, the present invention provides a portal site distribution program, used for a portal managing server which supplies a portal site to a portable terminal in an access by being connected through a network to a portal site data providing device which writes an address data accessible to a portal site onto a memory medium of a portable terminal to be an access target of the address data, the program achieving:
a portal site building data storage device for storing information for forming the portal site to be supplied to the portable terminal; a portal information storage device for storing portal information which selects and specifies a website inputted by a user to the portal site data providing device by receiving it from the portal site data providing device; a portal site building device for building, based on the information stored in the portal site building data storage device, a portal site which shows a display data accessible to the website specified by the portal information in response to an access from the portable terminal; and a portal site information distribution device for transmitting the information for displaying the built portal site to the portable terminal.

Furthermore, the present invention provides a portal site providing system, comprising
a portal site data providing device for providing, to a portable terminal, information on a portal site which is displayed when connecting to a network using the portable terminal, which comprises: a display device for displaying prescribed information to a user; an input device for receiving information inputted by a user; and a data reading/writing device for reading/writing data from/to the memory medium of the portable terminal, and
a portal managing server for distributing the portal site, which is connected to the portal site data providing device through a network, wherein
the portal site data providing device comprises: a display control device for displaying, on the display device, information of various portal sites including website information which is accessible in advance through a portal site by reading it from the portal managing server; a website specifying information receiving device for receiving website specifying information which specifies the displayed website through the input device and for transmitting it to the portal managing server; and an address data storage device for reading out the address data accessible to the portal site which is built by the portal server according to the portal specifying information from an address data storage device in which the address data is stored in advance through a data reading/writing device for storing it to the memory medium of the portable terminal, and
the portal managing server comprises: a portal site building data storage device for receiving and storing the portal information transmitted from the portal site data providing device; a portal site building device for building, based on the information stored in the portal site building data storage device, a portal site which shows a display data accessible to the website specified by the portal information in response to an access from the portable terminal; and a portal site information distribution device for transmitting the information of the built portal site to the portable terminal which is making an access.

Thereby, it functions in the manner as has been described above and the above-described object can be achieved.

### ADVANTAGEOUS EFFECT OF THE INVENTION

The present invention is formed and functions as described above. With this, it becomes possible for a user to make an access to one's user-friendly portal site without setting the portal site having the links for the user's desired sites by operating the operation unit of the portable terminal in advance, in which a complicated operation is difficult to be performed. This is an excellent effect, which is not of the conventional case.
BRIEF DESCRIPTION OF THE DRAWINGS
[FIG. 1] A schematic diagram for showing the configuration of the present invention;
[FIG. 2] FIG. 2A is an illustration for showing the external appearance of a portal site data providing device and FIG. 2B is a functional block diagram for showing the configuration; [FIG. 3] A functional block diagram for showing the configuration of a portal managing server;
[FIG. 4] A flowchart for showing the operation of the portal site data providing device;
[FIG. 5] A flowchart for showing the operation of portal information editing processing as a part of the processing by the portal site data providing device;
[FIG. 6] A flowchart for showing the operation of the portal managing server;
[FIG. 7] A flowchart for showing the operation of portal site distribution processing as a part of the processing performed by the portal managing server;
[FIG. 8] A sequence chart for showing the operation of the entire system;
[FIG. 9] A sequence chart for showing the operation of the entire system continued from FIG. 8;
[FIG. 10] A sequence chart for showing the operation of the entire system continued from FIG. 9;
[FIG. 11] A sequence chart for showing the operation of the entire system continued from FIG. 10;
[FIG. 12] FIGS. 12A, B are illustrations for showing examples of screens displayed in the portal site data providing device;
[FIG. 13] FIGS. 13A, B are illustrations for showing examples of screens displayed in the portal site data providing device;
[FIG. 14] FIGS. 14A, B are illustrations for showing examples of screens displayed in the portal site data providing device;
[FIG. 15] FIGS. 15A, B are illustrations for showing examples of screens displayed in the portal site data providing device;
[FIG. 16] FIGS. 16A, B are illustrations for showing examples of screens displayed in the portal site data providing device;
[FIG. 17] FIGS. 17A, B are illustrations for showing examples of screens displayed in the portal site data providing device;
[FIG. 18] FIGS. 18A, B are illustrations for showing examples of screens displayed in the portal site data providing device;
[FIG. 19] FIGS. 19A, B are illustrations for showing examples of screens displayed in the portal site data providing device;
[FIG. 20] FIGS. 20A, B are illustrations for showing examples of screens displayed in the portal site data providing device; and
[FIG. 21] FIG. 21A, B are schematic diagrams for showing the configuration of the portal site data providing device of the second embodiment.

### BEST MODE FOR CARRYING OUT THE INVENTION

The present invention is to store, in the portable terminal, data which enables to make an access to a portal site desired by a user or a portal site having a link to the desired website provided in advance by receiving it from another device without operating the portable telephone. Thereby, the user can easily make an access to the desired portal site and to the target website from the desired portal site linked thereto for reading the contents. Therefore, it is possible to improve the convenience. The configuration of the present invention will be described by referring to each embodiment hereinafter.

### FIRST EMBODIMENT

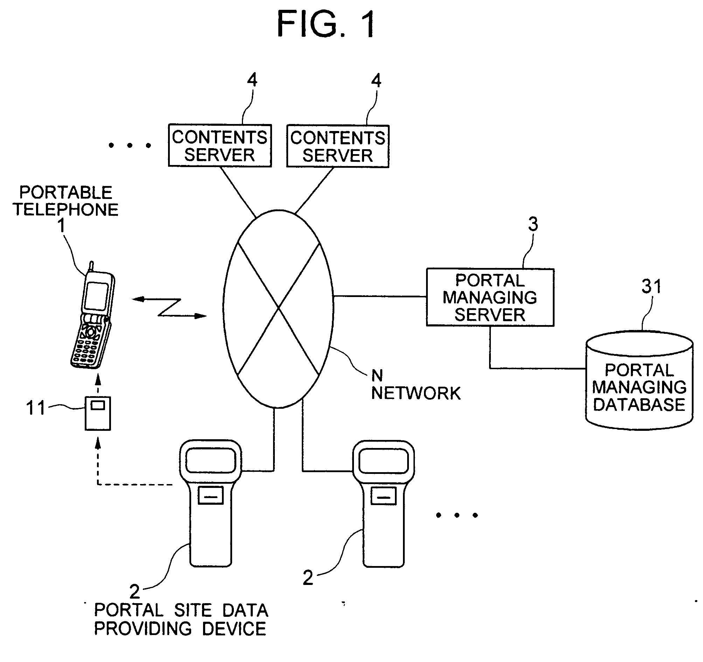

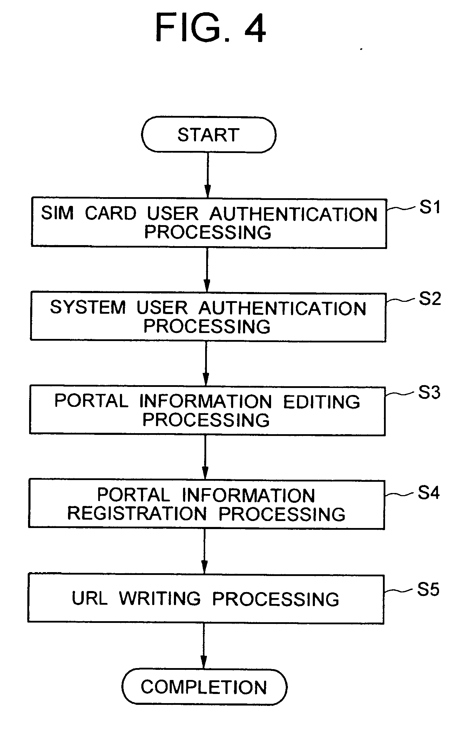

A first embodiment of the present invention will be described by referring to FIG. 1 - FIG. 20. FIG. 1 - FIG. 3 are block diagram for showing a schematic configuration of the present invention. FIG. 4 - FIG. 20 are illustrations such as flowcharts and the like for describing the operation of the present invention.

### (Overall Configuration)

As shown in FIG. 1, a portal site providing system as the present invention comprises: a portable telephone 1 which is a portable terminal owned by a user; a portal site data providing device 2 for directly providing portal site data to the portable telephone 1; a portal managing server 3 connected through a network N for managing the data, user information and the like provided from the portal site data providing device 2; and a contents server 4 for distributing the contents by building a website.

The outline of the operation in this system will be described. First, the user of the portable telephone 1 inserts a memory medium such as an SIM card mounted to the portable telephone 1 into a card reader/writer of the portal site data providing device 2 at the time when the user subscribes for the portable telephone 1 for the first time to start using the service. Subsequently, the user selects the desired website on the display of the portal site data providing device 2 and stores the portal site data in which the links to the site are displayed as a menu to the memory medium. Thereby, the user can easily obtain the data in regards to the user' s desired site even at the time of using the portable telephone. Therefore, the convenience at the time of connecting to the Internet can be more improved even in the case of using the portable terminal. In the followings, each constituent, that is, each computer will be described in detail.

### (Portable Telephone)

The portable telephone 1 is a portable terminal owned by a prescribed user, which comprises a network connecting function. Therefore, it is accessible to various web servers so that it is possible to obtain various contents.

Further, the portable telephone 1, specifically, is a GSM-type telephone. The GSM-type is mainly used in Europe, which is a system using an SIM card for identifying a subscriber. The SIM card is an abbreviation of Subscriber Identify Module, which is issued when subscribing to the GSM service and can be used by being set in the GSM-type portable telephone. In the SIM card, stored are: an SIM ID which is peculiar to each card; telephone number as the information of the subscriber; a PIN code as a personal identification number, and the like. It is in a system that the GSM-type telephone cannot be used until the SIM card is being set.

Further, the portable telephone 1 has a function of accessing to the URL at the time of connecting to the Internet by reading out an address data when the address data of the portal site is stored in advance. For example, the URL of the portal site is stored within the SIM card, and the portable telephone 1 has a function of accessing to the portal site by reading out the URL within a specific region of the SIM card. The URLs stored in the SIM card are stored by inserting the SIM card into the portal site data providing device in advance as will be described later.

However, there are some portable telephone terminals which do not read out the URL stored in the SIM card. Thus, the terminal, depending on its type, may have a function of storing the URL distributed by short mail service (SMS) to a memory within the terminal and of accessing to the portal server by referring to the URL.

### (Portal Site Data Providing Device)

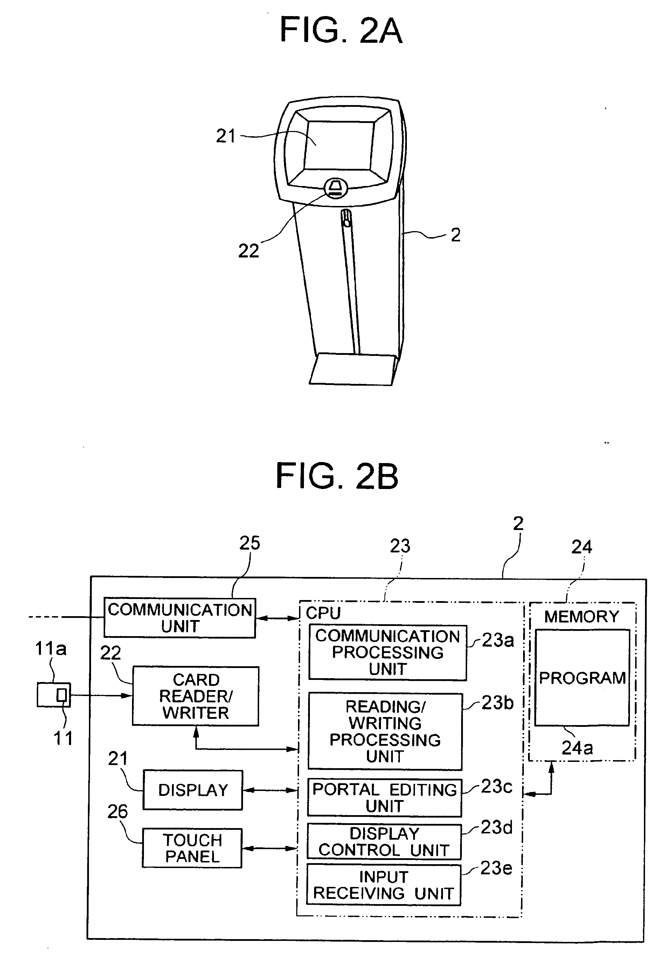

FIG. 2 shows the portal site data providing device. FIG. 2A is an example of the external appearance and FIG. 2B is a functional block diagram of the configuration. The portal site data providing device 2, for example, is placed in portable telephone shops, convenience stores, and the like.

The portal site data providing device 2 comprises: on its top face, a display 21 (displaying device) functioning as a touch panel 26 (input device); and a card reader/writer 22 (data reading/writing device) for reading/writing data from/to a storing area of an SIM card 11 of the portable telephone 1 when the SIM card 11 is inserted thereto by being mounted to a card holder 11a. The inside is constituted of computers, comprising a CPU 23 as an operation unit, a memory 24 or a hard disk as a storage unit. Further, the device can be connected to other computers through the network N and comprises a communication unit 25 as a communication device for achieving this.

In the CPU 23, each processing unit as shown below is built by reading out and mounting a program 24a which is stored in the memory 24 in advance, and the processing described below in the description of operation is achieved. That is, in the CPU 23, built are: a communication processing unit 23a for performing communication with other computers through the communication unit 25; a reading/writing processing unit 23b for performing reading/writing to/from the SIM card inserted to the card reader/writer 22; a portal editing unit 23c for setting the desired portal site according to the input from the user; a display control unit 23d for requesting a demand by displaying the configuration of the portal site and the like to the user; and an input receiving unit 23e for receiving the input data from the input unit 26 formed by a touch panel.

Specifically, the display control unit 23d receives, in advance, the contents of the portal server, that is, the portal contents information containing the information on the various websites accessible through the portal sites from the portal managing server which will be described later and displays it on the display. Further, the above-described portal editing unit 23c receives the portal information containing the specific information of the website which constitutes the portal site selected by the user through the input receiving unit 23e from the display on the display control unit 23d (portal specifying information receiving device). Further, the portal editing unit 23c (portal information transmitting device) transmits the received portal information to the portal managing server, including the SIM ID which is an identification data peculiar to the user read out from the SIM card 11 which is inserted to the card reader/writer 22 in the reading/writing processing unit 23b. The reading/writing processing unit 23b (address data storage device) reads out the SIM ID from the SIM card as described above and also writes the URL to be the address data of the portal site in the SIM card 11 of the user whose portal information is determined. The address data is the URL data being set in advance and stored in the portal managing server 3. However, as will be described later, the identification data such as the SIM ID is added to the URL when the URL is actually written to the SIM card.

Further, the portal site is built in the portal managing server 3 based on the above-described portal information. Especially, the portal site is built in accordance with the user who is making an access and the portal site information is transmitted to the portable telephone 1. Each processing performed by the CPU will be described in detail at the time of describing the operation.

The portal site in the present invention is a site which is displayed when connecting to the Internet using the portable terminal 1. In general, there are portal sites built by the communication carriers, sites provided by terminal makers, and further, portal sites having various types of search engines. However, in the present invention, the portal site is not necessarily limited to websites. It may be data displayed essentially in the screen at the time of connecting to the Internet connection, which is stored in the portable terminal.

### (Portal Managing Server)

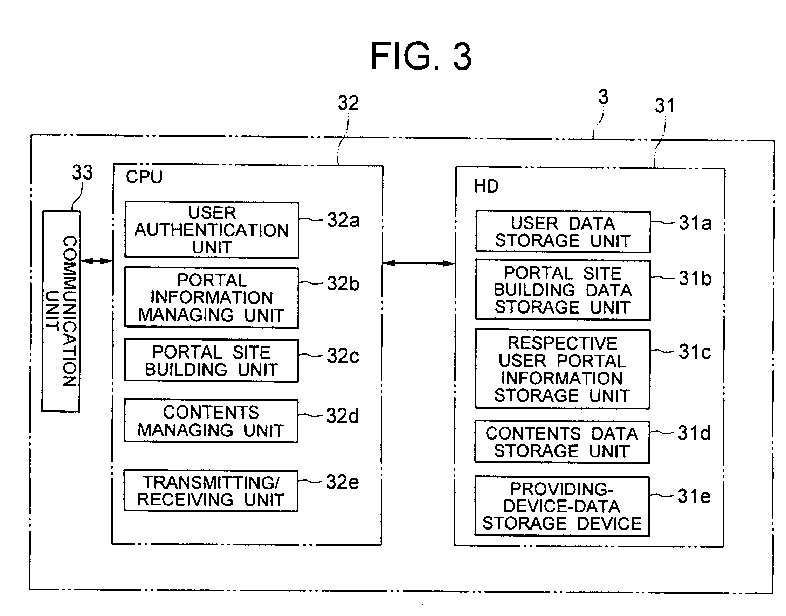

The portal managing server is a server which, as described above, provides various data to the portal site data providing device 2 and manages the data regarding the portal site, which is customized by the user. In FIG. 1, a portal managing database 31 as the storage unit is separately illustrated from the portal managing server 3. However, it may be stored within the portal managing server as a server computer. The configuration of the portal managing server 3 (including the portal managing database) will be described by referring to the functional block diagram of FIG. 3.

In the CPU of the portal managing server 3, a specific program is installed. Thereby, it comprises a function of managing various data such as the data to be supplied to the portal site data providing device 2 to be displayed on the display 21 of the device 2, the portal information for specifying the portal site for each user, and the like. Specifically, built are: a transmitting/receiving unit 32e for performing transmission/reception of the data between with the portal site data providing device 2 and for performing distribution of the portal site which is built in response to the access from the portable telephone 1; a user authentication unit 32a for checking whether or not the PIN code read out from the SIM card and the SIM ID as the identification data peculiar to the user are user-registered; a portal managing unit 32b for managing the portal information which is the constituent of the portal being set by each user; a portal site building unit 32c for building the portal site based on the portal information; and also a contents managing unit 32d for managing the contents (website) which can be contained in the portal site. In accordance with this, built in the portal managing database 31 are: a user data storage unit 31a for storing the registration information of the registered user who has already used the system; a portal site building data storage unit 31b to which data such as materials for building the portal site are stored; a respective user portal information storage unit 31c showing the configuration of the portal site for each user; a contents storage unit 31d to which the contents to be distributed to the portable terminal 1 of the user is stored; and also a providing-device-data storage unit 31e containing the screen information displayed by the portal site data providing device 2 and the control program. In the providing-device-data storage unit 31e, the URL of the site to be the address of the portal site built by the portal managing server 3 itself is stored. The URL is provided to the portal site data providing device 2 and written to the SIM card 11 of the portable telephone 1 by the device 2. The functions of each processing unit and the contents of the data will be described in detail at the time of describing the operation.

### (Operation)

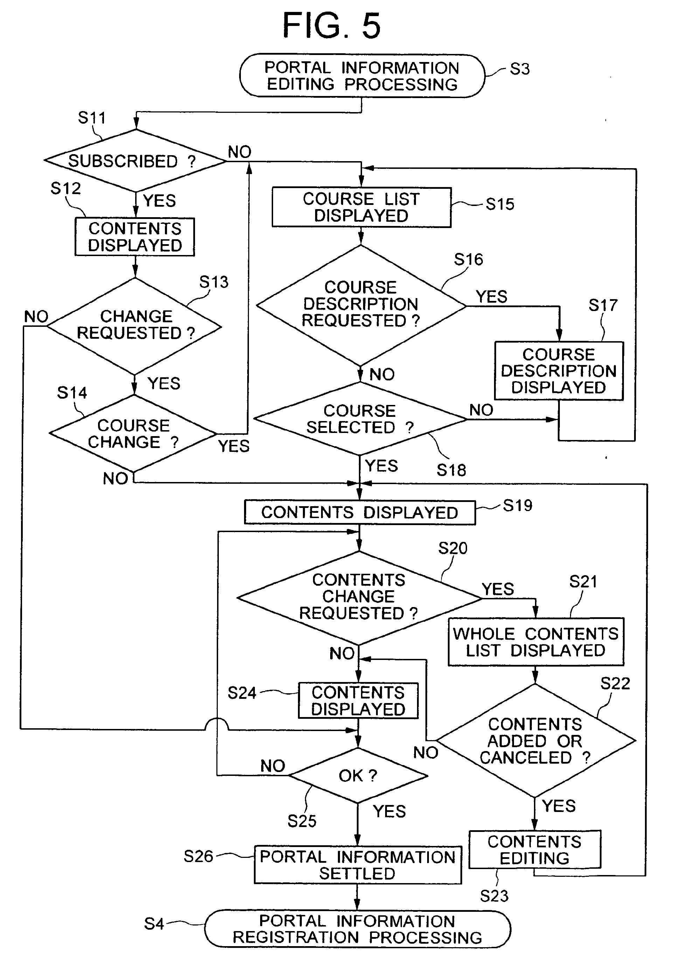

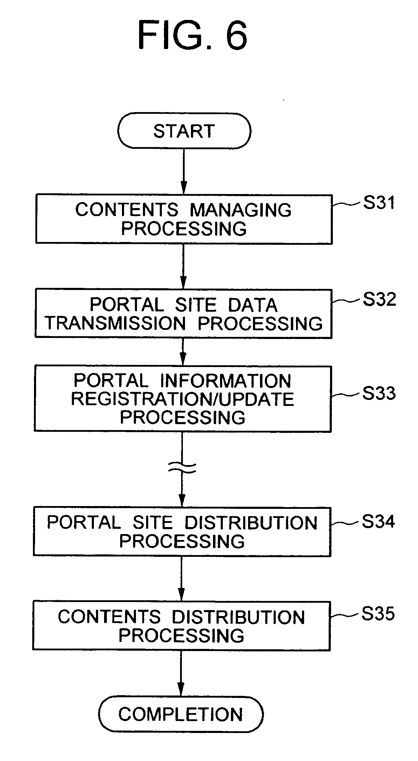

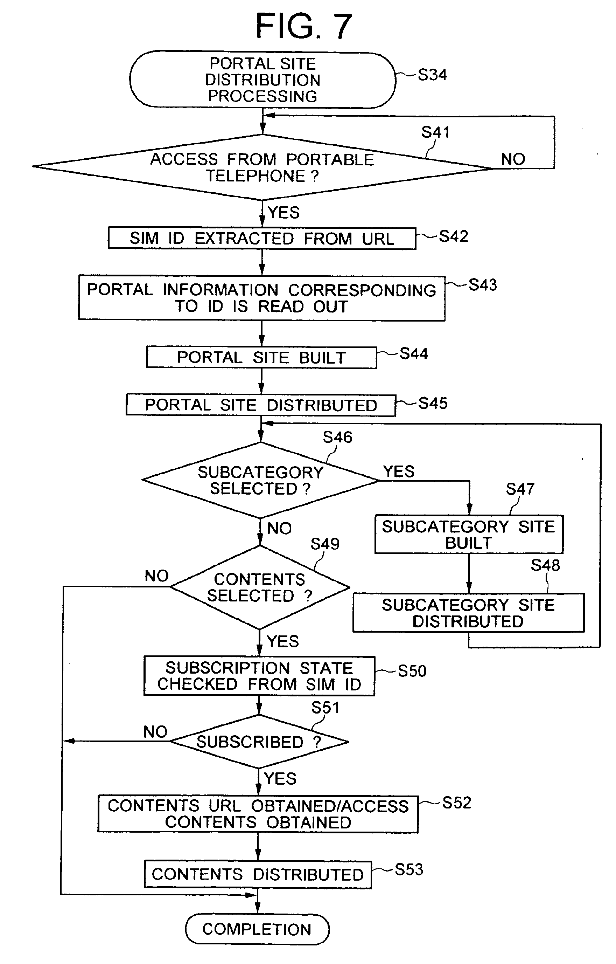

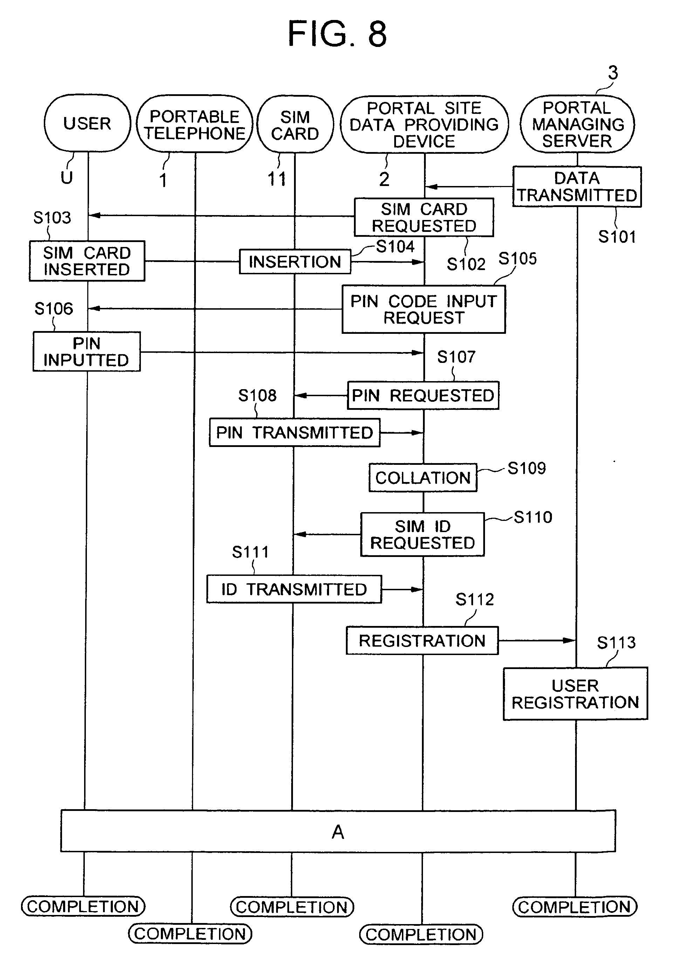

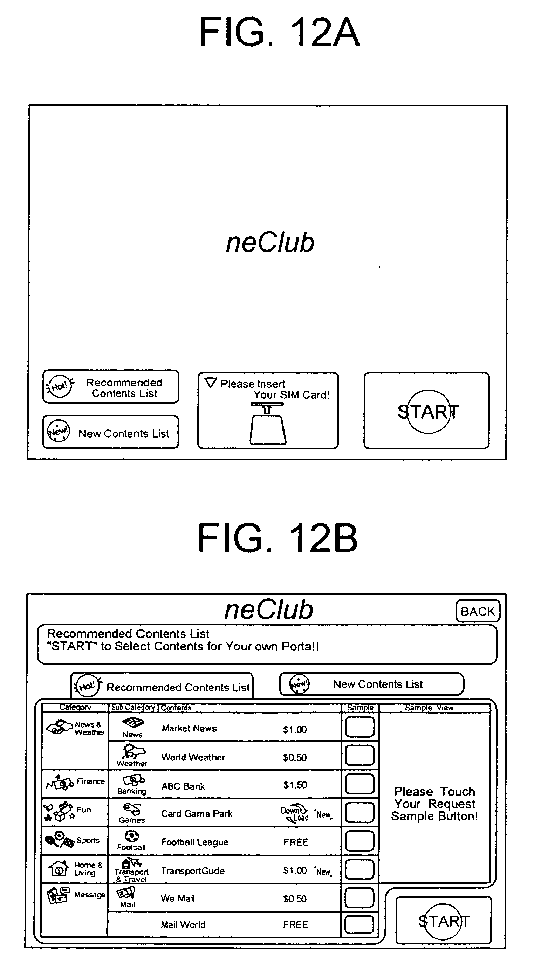

Next, the operation of the above-described system will be described by referring to FIG. 4 - FIG. 20. FIG. 4 is a flowchart showing the operation of the portal site data providing device 2, and FIG. 5 is a flowchart showing the operation of the portal information editing processing as a part of the processing thereof. FIG. 6 is a flowchart showing the operation of the portal managing server 3, and FIG. 7 is a flowchart showing the operation of the portal site distribution processing as a part of the processing thereof. FIG. 8 - FIG. 11 are sequence charts showing the operation of the entire system, and FIG. 12 - FIG. 20 are illustrations for showing screens displayed on the display 21 of the portal site data providing device 2. The operation of the entire system will be described hereinafter by referring mainly to the sequence charts of FIG. 8 - FIG. 11. At the same time, the detailed operation will be described by referring to other drawings.

### (Operation of Portal Site Providing Device)

First, when subscribing for the portable telephone 1 for the first time, the user of the portable telephone 1 obtains the SIM card 11 to be used therewith. In the initial state, the SIM card 11 is mounted to the card holder 11a. Although the newly subscribed user will be mainly described in the followings, the case of a user who has already used the system will be described as well. In that case, the SIM card 11 needs to be mounted to the card holder 11a and inserted to the portal site data providing device 2.

The user uses the portal site data providing device 2 for storing the address data of the desired portal site of the user oneself to the SIM card 11. The operation of the portal site data providing device 2 can be achieved when the data stored in the providing-device-data storage unit 31e of the portal managing server 3 is supplied through the transmission/reception unit 32e (step S101 of FIG. 8) to be mounted to the CPU 23. For example, the screen data displayed on the display, the courses of the selectable portal sites, contents of each course, data regarding the websites which can be added to the portal site, and also the address data for accessing to the portal site are transmitted to the portal site data providing device 2 from the portal managing server 3.

When the user touches the display 21 of the portal site data providing device 2, first, the screen as shown in FIG. 12A is displayed on the display 21 of the portal site data providing device 2 as an opening screen. Then, the user, according to a command for inserting the SIM card (step S102 of FIG. 8) as displayed in the center of the bottom of the screen, inserts the SIM card into the card reader/writer 22 (see Fig. 2A) (steps S103, S104 of FIG. 8). By selecting a button positioned in the bottom left of the opening screen, update information of the contents which can be mounted to the portal site is displayed as shown in FIG. 12B. The update information on these contents is also supplied from the portal managing server 3 (the contents data storage 31d).

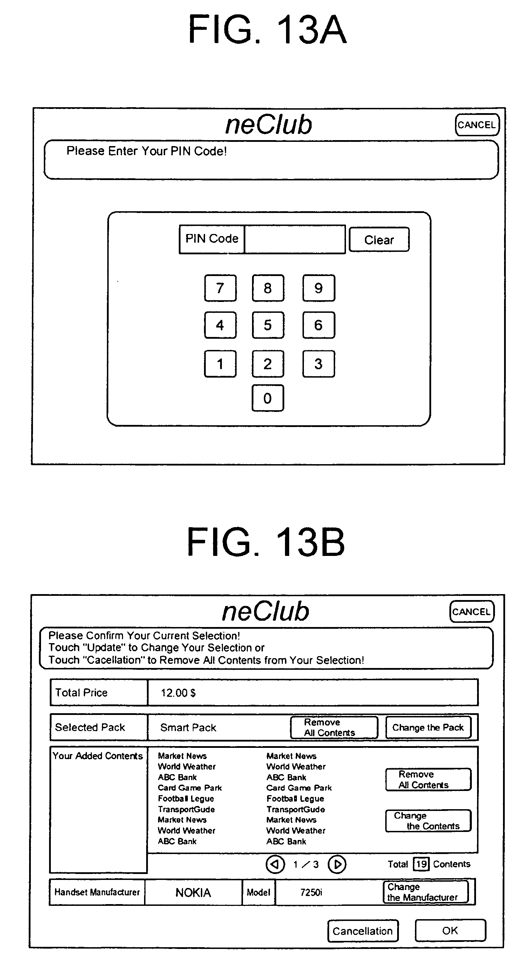

Subsequently, the portal site data providing device 2 to which the SIM card is inserted, as shown in FIG. 13A, requests a user U to input the PIN code of the SIM card (step S105 of FIG. 8). In response, when the user inputs the PIN code (step S106 of FIG. 8), the portal site data providing device 2 stores it and also reads out the PIN code stored in the SIM card inserted to the card reader/writer 22 (steps S107, S108 of FIG. 8), and checks whether or not it is the same as the one inputted by the user (step S109 of FIG. 8). Thereby, the authentication processing of the SIM card user is performed (step S1 of FIG. 8). Thus, a proper use by the user having the SIM card is achieved and the security can be improved.

Then, when determined that it is used by the user oneself, the "SIM ID", which is peculiar to each user, is read out from the inserted SIM card (steps S110, S111 of FIG. 8). Then, the read-out information is transmitted to the portal managing server 3 (step S112 of FIG. 8), and the SIM ID and the PIN code are stored in the user data storage 31a as the registered user (step S113 of FIG. 8). The user authentication processing is performed (step S2 of FIG. 4) in the manner as described above. After completing the authentication processing, the editing processing of the portal site of the user is performed (step S3 of FIG. 4). The editing processing will be described in detail by referring to FIG. 5.

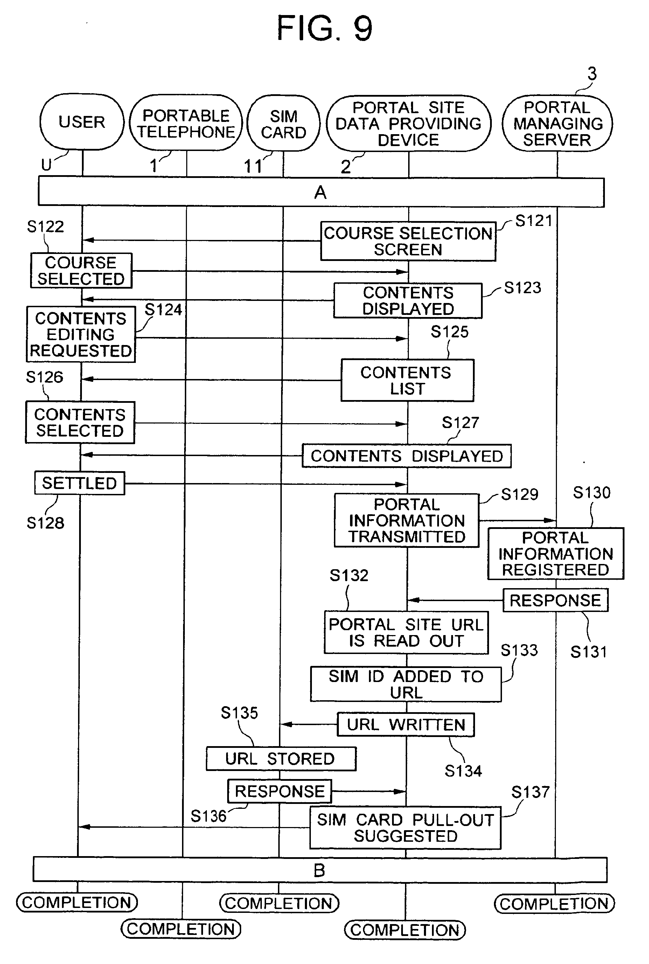

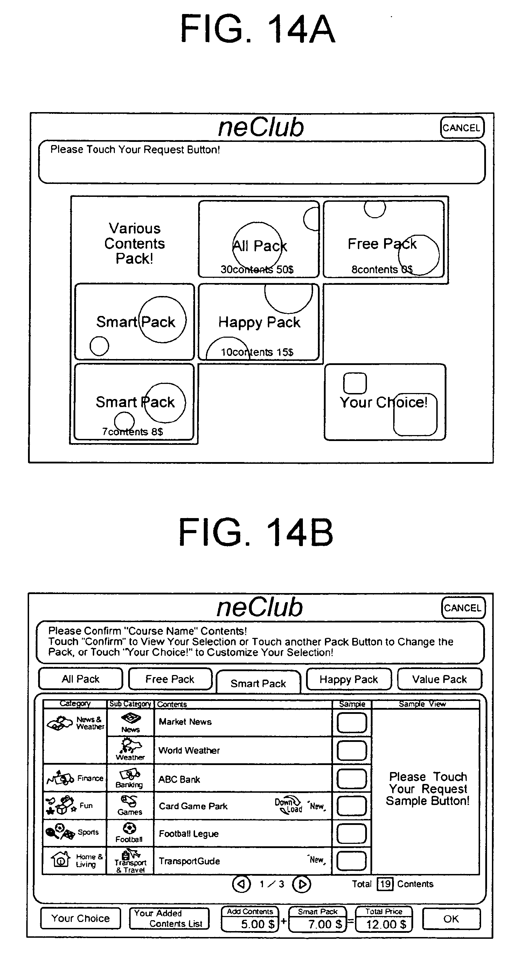

First, if it is determined that the read-out SIM ID is that of the already-registered user (step S11 of FIG. 5) by referring to the registered user data in the user data storage unit 31a of the portal managing server 3, the portal information of the portal site which is subscribed at present by the user is read out from the respective user portal information storage unit 31c using the SIM ID as a key, and the contents are displayed on the screen for verification (see FIG. 13B, step S12 of FIG. 5). If there is no change necessary in the contents of the portal site (NO in step S13 of FIG. 5), it proceeds to check whether or not the present portal site is fine (step S25 of FIG. 5). In the meantime, if there is a request for changing the contents (YES in step S13 of FIG. 5) and no request for changing the course of the portal site (NO in step S14 of FIG. 5), it proceeds to the step S19 to be described later. If the courses are to be changed (YES in step S 14 of FIG. 5), it proceeds to the same processing as the case of first-time subscriber and a list of the courses of the portal sites, as shown in FIG. 14A, is displayed (step S15 of FIG. 5, step S121 of FIG. 9). As for the courses of the portal sites, there are some basic courses in which the contents of the portal sites are set in advance and the types of the accessible websites vary by each of the courses.

For checking the contents of each course, a button for requesting description of the course is selected (YES in step S16 of FIG. 5), so that the contents of links (a list of the websites) contained in advance in each course are displayed (step S17 of FIG. 5). If "Smart Pack" is selected at this time (YES in step S18 of FIG. 5, step S122 of FIG. 9), the contents contained in advance in the selected course are displayed as shown in FIG. 14B (step S19 of FIG. 5, step S123 of FIG. 9).

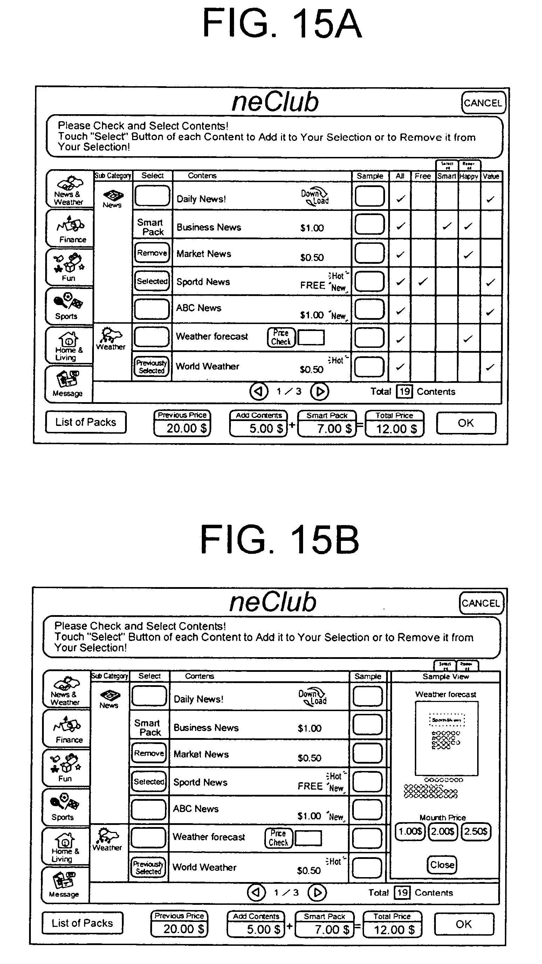

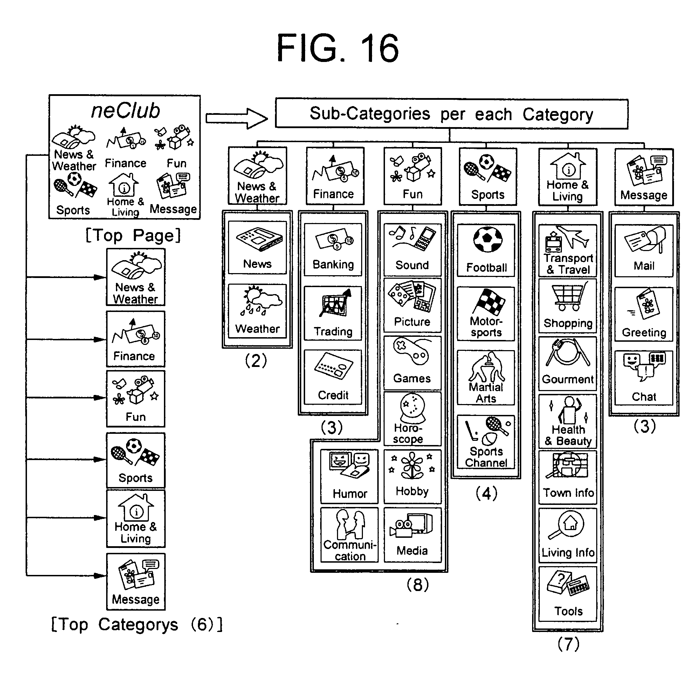

In response, if the user is unsatisfied with the contents of the selected course, the user requests editing of the contents (YES in step S20 of FIG. 5, step S124 of FIG. 9). In response to the request for editing, the portal site data providing device 2 displays a list of the contents as shown in FIG. 15A (step S21 of FIG. 5, step S125 of FIG. 9). For adding the contents, the user inputs information for selecting the contents to the portal site data providing device 2 (YES in step S22 of FIG. 5, step S126 of FIG. 9). For example, by clicking the display of respective contents, as shown in FIG. 15A, for selecting the checkbox in the section of the presently selected course, it is possible to add the link displayed in the portal site of the course (step S23 of FIG. 5). At this time, if the user desires to read the detail of the contents, by pressing the button of "Sample" as shown in FIG. 15B, an example of the screen shown in the contents and the descriptive data of the contents are displayed. The contents data at this time may be the one which is initially transmitted from the portal managing server 3, or may be the data displayed by the portal site data providing device 2, which is requested from the portal managing server 3 for each time a selection is made by the user. In the embodiment, as the contents which can be added to the portal site, there are ones shown in FIG. 16, which are provided in the top category of the hierarchy, respectively. That is, when the portal site is displayed, first, six categories are shown on the top page, and by selecting a category, the menu of the selected category is to be displayed.

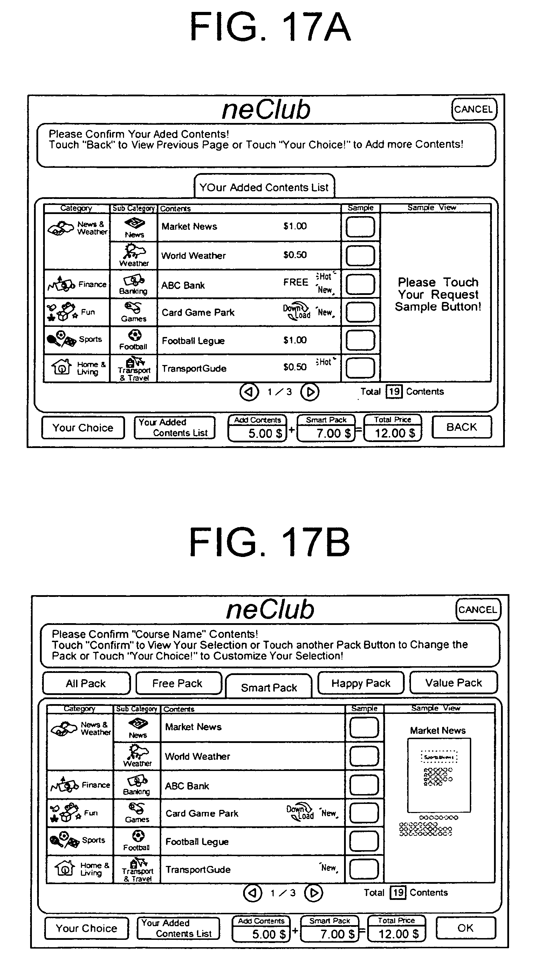

Upon receiving the information from the user for selecting the contents, the portal site data providing device 2 displays the menu of the portal site reflecting the contents of the received information, such as the details of the added contents (FIG. 17A) and a menu list of the portal sites to which the details of the contents are inserted (step S24 of FIG. 5, step S127 of FIG. 9). When the user desires to change the contents after viewing the menu, the user inputs the request for editing (changing) the contents again for adding or canceling the contents (NO in step 25 of FIG. 5) as described above.

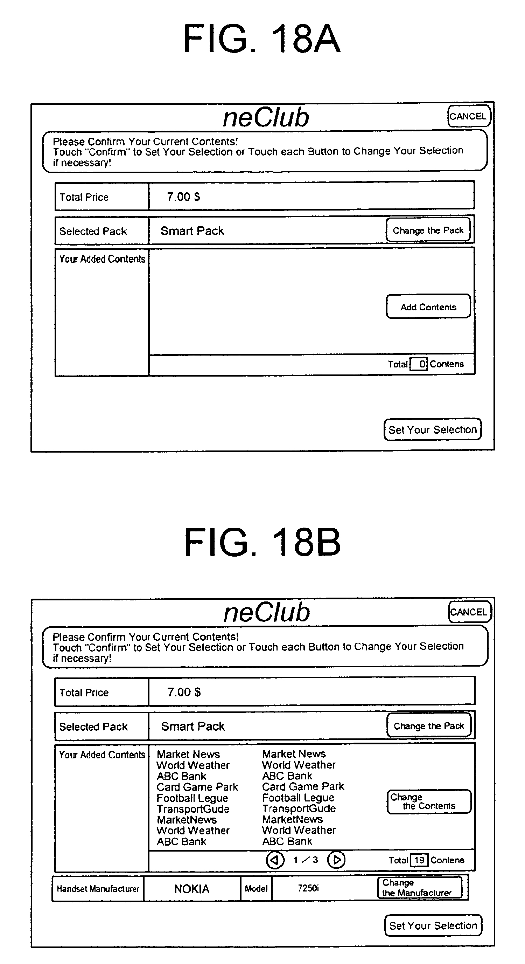

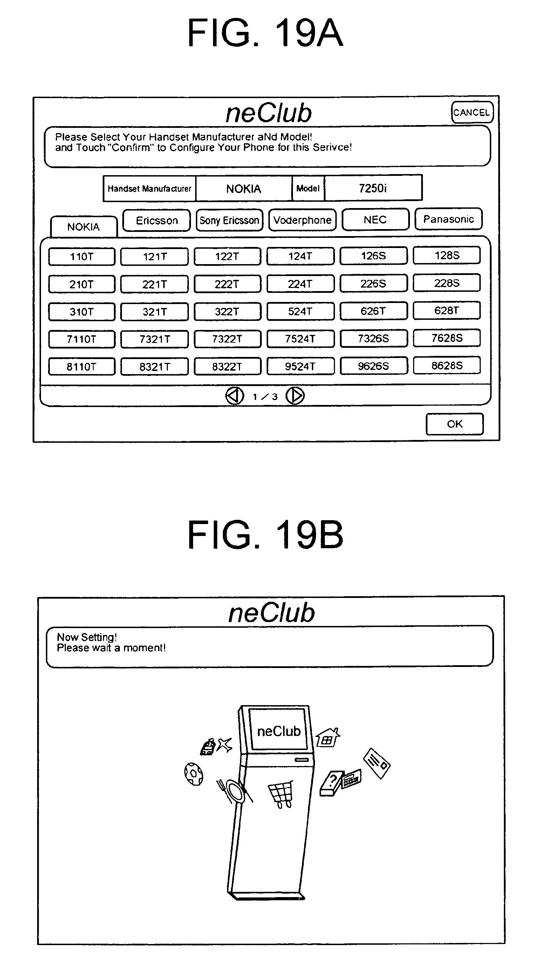

After completing the editing of the contents, the user presses the "OK" button on the screen of the portal site data providing device. Thereby, as shown in FIG. 18A, FIG. 18B, the contents of the portal site selected by the user can be displayed. By settling it as the final decision (step S128 of FIG. 9), the portal site being selected so far, that is, the portal site containing the menu of each contents site, can be determined (step S26 of FIG. 5). At this time, as shown in FIG. 19A, a screen for inquiring the type of the terminal of the portable telephone used by the user is displayed before making the final decision, and the user inputs the terminal information in response. Upon this, the confirmation screen (FIG. 18B) to which the information is reflected is displayed.

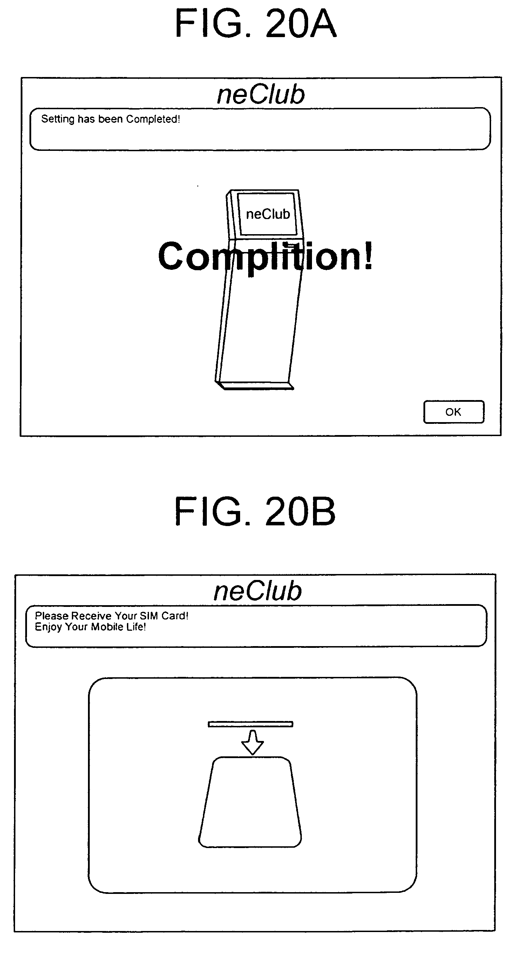

Subsequently, in the portal site data storage device 2, the information for selecting the determined portal site, that is, the portal information, is registered to the portal managing server 3 (step S4 of FIG. 4). The menu information of the portal site determined by the user, the portal information containing the contents information to be added thereto, and also the terminal information are transmitted to the portal managing server along the SIM ID from the portal site data providing device 2 (step S129 of FIG. 9), and the information along with the SIM ID is registered to the respective user portal information storage unit 21c in the portal managing server 3 (step S130 of FIG. 9). Upon receiving the response from the portal managing server 3, the portal site data providing device 2 reads out the URL of the portal site being transmitted from the portal managing server 3 (step S132 of FIG. 9), or obtains, for the first time, the URL from the portal managing server 3 at this time and adds the encoded SIM ID to the end of the URL (step S133 of FIG. 9) to be written to the SIM card (step S134 of FIG. 9). Thereby, the SIM ID is added to the end of the URL written to the SIM card, so that it becomes the URL peculiar to each user. The URL is for accessing to the portal managing server. During the time of recording it to the SIM card as described above, the screen as shown in FIG. 19B is shown on the display of the portal site data providing device 2. When the URL is actually written to the SIM card (step S135 of FIG. 9), and the response data is received after completing the writing (step S136 of FIG. 9), the writing completion screen as shown in FIG. 20A is displayed. Then, as shown in FIG. 20B, a screen for suggesting to pull out the SIM card is displayed (step S137 of FIG. 9).

Thereby, it is possible for the user to easily set the portal site containing the website desired by the user oneself while viewing the screen displayed in the portal site data providing device 2 and to record the URL of the sites to the memory medium of the own portable terminal. Accordingly, it enables to obtain the data easily and promptly without operating the small operation unit of the portable terminal.

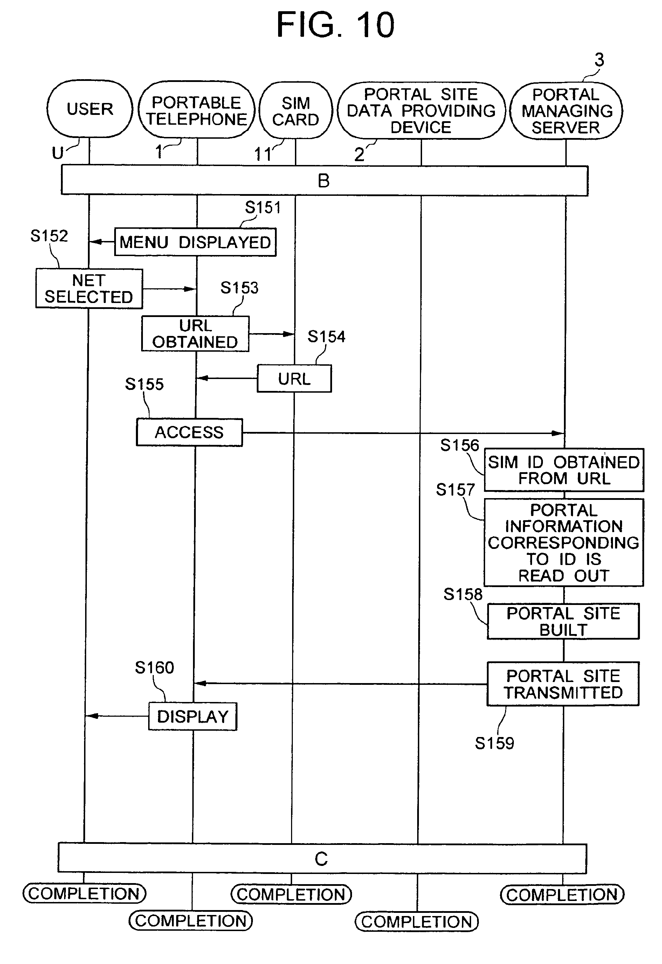

Next, by referring to FIG. 10, FIG. 11 and FIG. 6, FIG. 7, described are the operation of the entire system and the operation of the portal managing server 3 at the time of making an access to the URL after the URL of the user' s personal portal site is recorded in the memory medium of the portable telephone 1 as described above.

Before that, the operation of the portal managing server 3 with respect to the portal site data providing device before being accessed by the user will be described briefly. First, the portal managing server 3 always receives the contents which can be added to the portal site. That is, it receives a portal site adding request by receiving an access from another contents server 4, which is, specifically, from the administrator of the contents server 4. When a specific condition is satisfied, it is registered as the contents site which can be additionally added to the portal site and the URL of the contents site, the text data of the detail of the contents, sample screen data and the like are stored in the contents data storage unit 31d (contents managing processing, step S31 of FIG. 6). The data is managed in the contents managing unit 32d, and is transmitted to the portal site data providing device 2 along with the screen data to be displayed in the device 2 and a program for controlling the display of the data (portal site data transmission processing, step S32 of FIG. 6). Further, as described above, performed is the portal information registration/update processing (step S33 of FIG. 6) for receiving and registering the portal information showing the contents of the portal site selected and set by each user, which is transmitted from the portal site data providing device 2.

Thereafter, when there is an access from the user through the portable telephone 1, the processing for distributing the portal site peculiar to the user is performed (step S34 of FIG. 6). The operation will be described in detail. First, when the user selects the Internet connection (step S152 of FIG. 10) from the top menu showing the functions of the portable telephone 1 (step S151 of FIG. 10), the terminal of the portable telephone 1 reads out the URL recorded by the portal site data providing device 2 as described above from the SIM card (steps S153, S154 of FIG. 10). Using the URL, an access is made to the portal managing server 3 as the connection target of the URL (step S155 of FIG. 10). There are portable terminals which do not read out the URL stored in the SIM card at the time of making an access to the Internet depending on its type. Therefore, there may be cases where the portal managing server 3 distributes the URL accessible to the portal site to the portable telephone 1 of the user through a short mail service (SMS) or an E-mail based on the information on the types of the portable terminal inputted by the user as described above. In this case, the URL stored in a local region is read out and an access is made according to this.

Then, when there is an access from the portable telephone 1 (YES in step S41 of FIG. 7), the portal managing server 3 extracts the SIM ID included in the end of the received URL (step S42 of FIG. 7, step S156 of FIG. 10). It then reads out the portal information of the ID or information related to the ID by referring to the SIM ID (step S43 of FIG. 7, step S157 of FIG. 10). Thereby, the portal information of the user who is making an access can be read out. The portal site is built (step S44 of FIG. 7, step S158 of FIG. 10 according to the read-out portal information and the portal site building data. At this time, for example, if it is the portal site in which no change is applied in the course prepared in advance, this site is used since it is prepared in advance as the portal site building data. When there are additional contents, the link which is the address data of the contents site stored in the contents data storage unit is added to the portal site of each course as the base so as to build the portal site which is appropriate for each user. Then, the data of built portal site is distributed to be displayed on the display unit of the portable telephone 1 (step S45 of FIG. 7, step S159 of FIG. 10). At this time, the above-described portal information contains the information regarding the type of the portable telephone 1. Thus, at the time of building, it is built by adjusting the screen size and the like so that the screen display becomes appropriate for each type. Therefore, in the portable telephone 1, the portal site can be appropriately displayed and the user can view the site (step S160 of FIG. 10).

Next, described is the processing operation at the time of making an access to each contents site from the displayed portal site (step S35 of FIG. 6). First, the user selects a menu item from the portal site and if it is a subcategory (YES in step S46 of FIG. 7), a page (site) of the subcategory for displaying the contents site included in the subcategory is built by referring to the portal information (step S47 of FIG. 7). Then, the page is distributed.

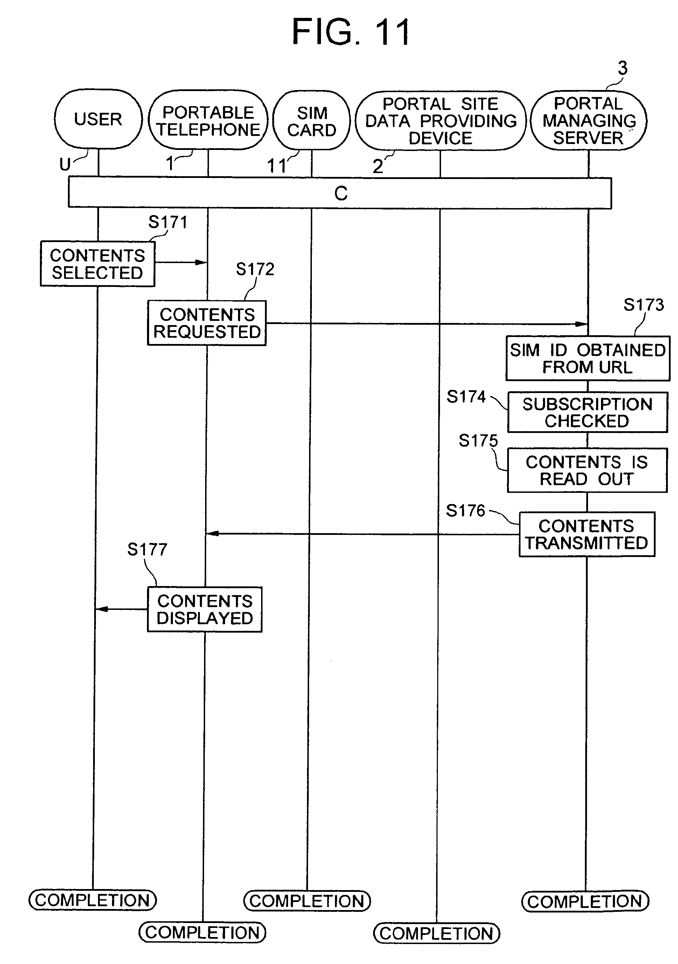

After that, when the main page of the portal site or the link of the contents site displayed in the subpage is selected (YES in S49 of FIG. 7, step S171 of FIG. 11), the data for requesting the contents is transmitted to the portal managing server 3 from the potable telephone 1 (step S172 of FIG. 11). Upon receiving it, the portal managing server 3 reads out the SIM ID of the user from the URL. If it has already been read out, the SIM ID on the buffer memory is obtained (step S173 of FIG. 11). Then, the SIM ID and the data within the contents data storage unit 31d are referred for checking whether or not the user has already subscribed for using the selected contents (step S50 of FIG. 7, step S174 of FIG. 11). When it is judged that the user has subscribed (YES in step S51 of FIG. 5), an access is made to the contents server according to the URL of the contents for obtaining the required contents (step S52 of FIG. 7, step S175 of FIG. 11). By distributing the contents to the portable telephone 1 (step S53 of FIG. 7, step S176 of FIG. 11), the user can read the contents through the display unit of the portable telephone 1 (step S177 of FIG. 11).

In the above, after receiving the contents once in the portal managing server from the contents server, the contents are distributed to the portable telephone 1. Thereby, the portal managing server 3 functions as a proxy server so that it is possible to transmit/receive data promptly. At the same time, when it is a pay site with a charge, as described above, the fee can be charged through the portal site data providing device 2 at the time of selecting the portal site. Therefore, it becomes unnecessary to subscribe and charge a fee for each contents site.

Thereby, the user can input the contents of the one's desired portal site through the portal site data providing device 2, and the URL of the portal site to which the contents are reflected is automatically stored in the recording medium such as the SIM card. Thus, only the URL which is accessible to the target portal site is stored in the memory of the portable terminal and a customized portal site can be easily formed. Especially, by storing the URL of the portal site along with the own ID number, the ID data is automatically transmitted to the portal managing server 3 when making an access using the URL. Thereby, the portal managing server 3 can identify the user who is making the access, so that the portal site peculiar to the user can be built to be distributed. Thus, the convenience for the user is improved.

The above-described embodiment has been described by referring to the case where the website (contents) linked from the site can also be selected in the portal site selected and specified by the user through the portal site data providing device. However, it is not necessarily limited to this. Simply, there may be a plurality of portal sites (not limited to the case where the sites are in the portal managing server 3) being prepared, and a single portal site thereof is selected among them and the URL may be stored in the SIM card. Thereby, it is also possible to obtain the URL of the portal site desired by the user without operating the portable terminal and the operation thereafter becomes easy. The memory medium of the portable telephone to which the URL is stored is not limited to the SIM card. It may be other memory medium such as an SD card.

### SECOND EMBODIMENT

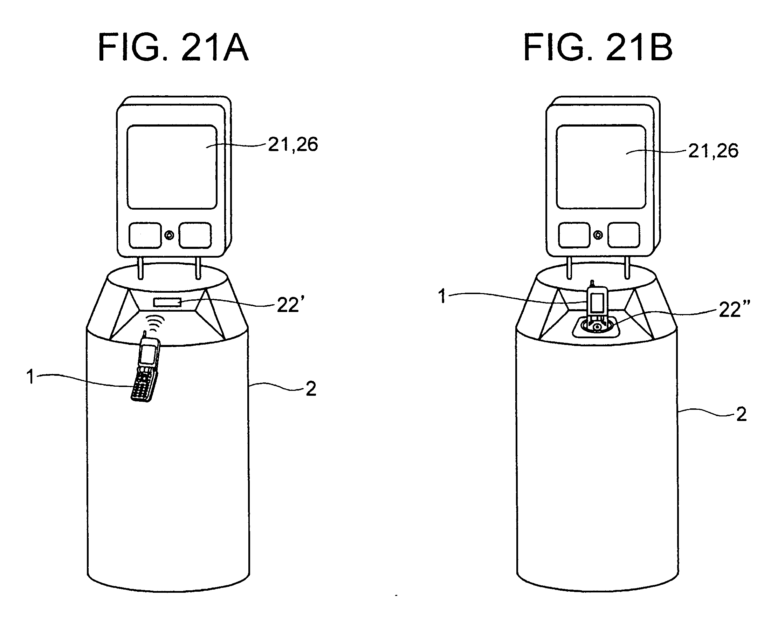

Next, a second embodiment of the present invention will be described by referring to FIG. 21. In the embodiment, the configuration of the data reading/writing device provided to the portal site data providing device 2 is different from that of the first embodiment. That is, it is not formed by the card reader/writer 22 as shown in FIGS. 2A, 2B. For example, it may be formed by a noncontact short-distance communication device such as an infrared port 22' (see FIG. 21A) which performs reading/writing of data from/to the memory medium built in the portable telephone 1 through the infrared communication, or a connecting device 22" (see FIG. 21B) connected to a connecting terminal of the portable telephone 1. As described above, it is possible to store the portal site data without taking in/out the memory medium such as the SIM card to/from the portable telephone 1. Therefore, the convenience can be more improved.

### THIRD EMBODIMENT

Next, a third embodiment of the present invention will be described. The embodiment is different from the above-described embodiments in respect that the data to be stored in the memory medium of the portable telephone by the portal site data providing device 2 is not the URL of the portal site but the portal screen data for locally building the portal site.

Therefore, in the embodiment, the portal site data providing device stores the portal screen data for building the portal screen data. Further, built in the CPU is a portal screen data building processing unit for building the portal screen data according to the portal information inputted by the user. The built portal screen data is stored in the SIM card as the memory medium of the portable telephone 1 or stored directly to the built-in memory of the portable telephone.

Thereby, the portal screen data in which the links of the address data of the various websites selected by the user are collected is built and it is stored in the portable terminal. Thus, the portal screen displaying the links to the websites as the one' s selected menu is displayed on the portable terminal so that the user-friendly portal screen for the user is displayed at the time of connecting to the network without operating the portable terminal in advance for setting the portal site in which the links to the one's desired sites are prepared. Therefore, it enables to make an access to each site displayed thereby.

### INDUSTRIAL APPLICABILITY

According to the present invention, the user can easily use internet with their portable terminals, which enables internet to be used increasingly by the user depending on the present system set. Thus, the present invention has industrial applicability.

## Claims

1. A portal site data providing device, comprising an input device for receiving information inputted by a user and a data reading/writing device for reading/writing data from/to a memory medium by mounting the memory medium which is removable from the portable terminal, for providing, to the memory medium of the portable terminal, information regarding a portal site which is displayed when connecting to a network using the portable terminal, the portal site data providing device further comprising:
a portal specifying information receiving device for receiving portal specifying information which specifies contents of a portal site from a user through the input device; and an address data storage device for reading out the address data accessible to the portal site which is specified according to the portal specifying information from an address data storage apparatus in which the address data is stored in advance through a data reading/writing device for storing it to the memory medium of the portable terminal.

2. The portal site data providing device according to claim 1, further comprising:
a display device for displaying prescribed information to a user; and a display control device for displaying portal contents information on the display device by reading it out from a portal contents information storage apparatus in which the portal contents information showing the contents of various portal sites is stored in advance, wherein
the portal specifying information receiving device receives portal specifying information from a user for showing contents of a portal site which is selected and specified by the user according to the portal contents information displayed on the display device.

3. The portal site data providing device according to claim 1, wherein
the portable terminal is a GSM-type portable telephone, and the memory medium of the portable terminal is an SIM card.

4. The portal site data providing device according to claim 2, wherein the portal contents information stored in the portal contents information storage unit is information regarding various websites which can be accessed in advance through the portal site.

5. A portal site data providing device, comprising an input device for receiving information inputted by a user and a data reading/writing device for reading/writing data from/to a memory medium being built in to be mounted to the portable terminal, for providing, to the memory medium of the portable terminal, information regarding a portal site which is displayed when connecting to a network using a portable terminal, the portal site data providing device further comprising:
a portal specifying information receiving device for receiving portal specifying information for specifying contents of a portal site from a user through the input device; and an address data storage device for reading out the address data accessible to the portal site which is specified according to the portal specifying information from an address data storage apparatus in which the address data is stored in advance through a data reading/writing device for storing it to the memory medium of the portable terminal.

6. The portal site data providing device according to claim 5, further comprising:
a display device for displaying prescribed information to a user; and a display control device for displaying portal contents information on the display device by reading it out from a portal contents information storage apparatus in which the portal contents information showing the contents of various portal sites is stored in advance, wherein
the portal specifying information receiving device receives portal specifying information for showing contents of a portal site which is selected and specified by a user according to the portal contents information displayed on the display device.

7. The portal site data providing device according to claim 6, wherein the portal contents information stored in the portal contents information storage unit is information regarding various websites which can be accessed in advance through the portal site.

8. The portal site data providing device according to claim 7, wherein:
the portal specifying information receiving device has a function of receiving website specifying information for selecting and specifying a website displayed on the display device; and
the portal site data providing device comprises;
a portal screen data building device for building a portal screen data which shows display data related to an address data accessible to the website selected and specified according to the website specifying information, and
instead of the address data storage device, a portal screen data storage device for storing the portal screen data built by the portal screen data building device in the memory medium of the portable terminal through the data reading/writing device.

9. The portal site data providing device according to claim 7, wherein:
the portal specifying information receiving device has a function of receiving website specifying information for selecting and specifying a website displayed on the display device;
the portal site data providing device comprises a portal information transmitting device for transmitting the website specifying information as the portal information to a portal managing server which manages portal information of the user present on a network; and
the address data stored in the memory medium of the portable terminal by the address data storage device is an address data accessible to a portal site built by the portal managing server according to the portal information transmitted to the portal managing server.

10. The portal site data providing device according to claim 9, wherein the portal information transmitting device transmits an identification data peculiar to a user, which is inputted through the input device, to the portal managing server by including it in the website specifying information.

11. The portal site data providing device according to claim 9, further comprising an identification data reading-out device for reading out identification data peculiar to a user being stored in advance in a memory medium from the memory medium of the portable terminal through the data reading/writing device, wherein
the portal information transmitting device transmits the identification data read out by the identification data reading-out device to the portal managing server by including it to the website specifying information.

12. The portal site data providing device according to claim 5, wherein the portable terminal is a GSM-type portable telephone, and the memory medium of the portable terminal is an SIM card.

13. A method for supplying portal site data using a portal site data providing device for functioning to store information regarding a portal site which is displayed when connecting to a network through a portable terminal, the method comprising:
a portal specific information receiving step in which the portal site data providing device receives portal specifying information which specifies contents of a portal site from a user through an input device; an address data reading-out step in which the portal site data providing device reads out, from an address data storage device to which the address data is stored in advance, an address data accessible to the portal site which is specified according to the portal specifying information; and an address data storing step for storing the address data in a memory medium of the portable terminal by a data reading/writing device provided to the portal site data providing device, and
a memory medium mounting step for taking out the memory medium from the portable terminal and mounting it to the data reading/writing device at least before the address data storing step.

14. A method for supplying portal site data using a portal site data providing device for functioning to store information regarding a portal site which is displayed when connecting to a network through a portable terminal, the method comprising:
a portal specific information receiving step in which the portal site data providing device receives portal specifying information which specifies contents of the portal site from a user through an input device; an address data reading-out step in which the portal site data providing device reads out, from an address data storage device to which the address data is stored in advance, an address data accessible to the portal site which is specified according to the portal specifying information; and an address data storing step for storing the address data in a memory medium which is built in the portable terminal by a data reading/writing device provided to the portal site data providing device, and
at least before the address data storing step, a portable terminal mounting step for mounting the portable terminal to the data reading/writing device so that the data reading/writing device becomes accessible to the memory medium built in the portable telephone.

15. A portal site data providing program, used for a portal site data providing device which provides, to a memory medium of the portable terminal, information on a portal site which is displayed when connecting to a network using a portable terminal, the program achieving:
a portal specifying information receiving device for receiving portal specifying information for specifying contents of a portal site from a user through the input device; and
an address data storage device for reading out the address data accessible to the portal site which is specified according to the portal specifying information from an address data storage device in which the address data is stored in advance through a data reading/writing device for storing it to the memory medium of the portable terminal.

16. A portal managing server for providing a portal site to a portable terminal which is making an access, by being connected through a network to a portal site data providing device which writes an address data accessible to a portal site onto a memory medium of a portable terminal to be an access target of the address data, the portal managing server comprising:
a portal site building data storage device for storing information for building the portal site to be supplied to the portable terminal; a portal information storage device for storing portal information which selects and specifies the portal site inputted by a user to the portal site data providing device by receiving it from the portal site data providing device; and a portal site information distribution device for reading out, from the portal site building data storage device, information for displaying the portal site which is specified by the portal information according to an access from the portable terminal for transmitting it to the portable terminal.

17. A portal managing server for providing a portal site to a portable terminal making an access, by being connected through a network to a portal site data providing device which writes an address data accessible to a portal site onto a memory medium of a portable terminal to be an access target of the address data, the portal managing server comprising:
a portal site building data storage device for storing information for building the portal site to be supplied to the portable terminal; a portal information storage device for storing portal information which selects and specifies a website inputted by a user to the portal site data providing device by receiving it from the portal site data providing device; a portal site building device for building, based on the information stored in the portal site building data storage device, a portal site which shows a display data accessible to the website specified by the portal information in response to an access from the portable terminal; and a portal site information distribution device for transmitting the information for displaying the built portal site to the portable terminal.

18. The portal managing server according to claim 17, wherein
the portal information storage device has a function of receiving and storing an identification data peculiar to a user being inputted to the portal site data providing device along with the portal information by relating them; and
the portal site building device has functions of: requesting and obtaining the peculiar identification data of the portable terminal when receiving an access from the portable terminal; judging whether or not the obtained identification data and the identification data stored by the portal information storage device are consistent; and building a portal site based on the portal information stored by being related to the stored identification data when the data are consistent.

19. A method for distributing a portal site using a portal managing server which supplies a portal site to a portable terminal which is making an access, the method comprising:
a portal information storing step in which the portal managing server stores portal information which selects and specifies a portal site inputted by a user to a portal site data providing device connected through a network by receiving it from the portal site data providing device; a portal site building step for building, based on the information stored in the portal site building data storage device, a portal site which shows a display data accessible to the website specified by the portal information in response to an access from the portable terminal; and a portal site information distribution step for transmitting the information for displaying the built portal site to the portable terminal.

20. A portal site distribution program, used for a portal managing server which supplies a portal site to a portable terminal in an access by being connected through a network to a portal site data providing device which writes an address data accessible to a portal site onto a memory medium of a portable terminal to be an access target of the address data, the program achieving:
a portal site building data storage device for storing information for forming the portal site to be supplied to the portable terminal; a portal information storage device for storing portal information which selects and specifies a website inputted by a user to the portal site data providing device by receiving it from the portal site data providing device; a portal site building device for building, based on the information stored in the portal site building data storage device, a portal site which shows a display data accessible to the website specified by the portal information in response to an access from the portable terminal; and a portal site information distribution device for transmitting the information for displaying the built portal site to the portable terminal.

21. A portal site providing system, comprising
a portal site data providing device for providing, to a portable terminal, information on a portal site which is displayed when connecting to a network using the portable terminal, which comprises: a display device for displaying prescribed information to a user; an input device for receiving information inputted by a user; and a data reading/writing device for reading/writing data from/to the memory medium of the portable terminal, and
a portal managing server for distributing the portal site, which is connected to the portal site data providing device through a network, wherein
the portal site data providing device comprises: a display control device for displaying, on the display device, information of various portal sites including website information which is accessible in advance through a portal site by reading it from the portal managing server; a website specifying information receiving device for receiving website specifying information which specifies the displayed website through the input device and for transmitting it to the portal managing server; and an address data storage device for reading out the address data accessible to the portal site which is built by the portal server according to the portal specifying information from an address data storage device in which the address data is stored in advance through a data reading/writing device for storing it to the memory medium of the portable terminal, and
the portal managing server comprises: a portal site building data storage device for receiving and storing the portal information transmitted from the portal site data providing device; a portal site building device for building, based on the information stored in the portal site building data storage device, a portal site which shows a display data accessible to the website specified by the portal information in response to an access from the portable terminal; and a portal site information distribution device for transmitting the information of the built portal site to the portable terminal which is making an access.
